# EUROPÄISCHE PATENTSCHRIFT

(11) **EP 2 157 337 B1**
(45) Veröffentlichungstag und Bekanntmachung des Hinweises auf die Patenterteilung: **04.04.2012**
(21) Anmeldenummer: 09166075.3
(22) Anmeldetag: 22.07.2009
(51) Int. Cl.: F16H 45/02, F16D 25/0638, F16D 25/12

(54) **Kupplungsanordnung, insbesondere nasslaufende Kupplungsanordnung oder Überbrückungskupplungsanordnung einer hydrodynamischen Kopplungseinrichtung**
Clutch assembly, in particular wet-running clutch assembly or bridging clutch assembly of a hydrodynamic coupling device
Agencement d'embrayage, notamment agencement d'embrayagee par voie humide ou agencement d'embrayage par pontage d'un dispositif d'accouplement hydrodynamique

(30) Priorität: 21.08.2008 DE 102008039039
(43) Veröffentlichungstag der Anmeldung: 24.02.2010
(73) Patentinhaber: ZF Friedrichshafen AG, 88038 Friedrichshafen (DE)
(72) Erfinder: Thiede, Andreas, 97525 Schwebheim (DE); Heuler, Michael, 97080 Würzburg (DE); Sueck, Gregor, 97526 Sennfeld (DE)

(56) Entgegenhaltungen:
- EP-A- 1 672 254
- DE-T5-112007 002 842
- US-A- 5 172 799
- US-A1- 2007 235 277

## Beschreibung

Die vorliegende Erfindung betrifft eine Kupplungsanordnung, die beispielsweise als nasslaufende Kupplungsanordnung, insbesondere zu Anfahrzwecken, in einem Antriebsstrang eines Fahrzeugs eingesetzt werden kann, oder aber auch als Überbrückungskupplungsanordnung in eine hydrodynamische Kopplungseinrichtung, wie z. B. einen hydrodynamischen Drehmomentwandler, integriert sein kann.

Eine derartige Kupplungsanordnung umfasst ein mit Fluid gefülltes oder füllbares Gehäuse, eine mit dem Gehäuse zur Drehung um eine Drehachse gekoppelte erste Reibflächenanordnung, eine mit einem Abtriebsorgan zur Drehung um die Drehachse gekoppelte zweite Reibflächenanordnung, ein mit dem Gehäuse um die Drehachse drehbares Anpresselement, durch welches die erste Reibflächenanordnung und die zweite Reibflächenanordnung in Reibeingriff pressbar sind, wobei das Anpresselement einen Innenraum des Gehäuses in einen die Reibflächenanordnungen enthaltenden ersten Raumbereich und einen zweiten Raumbereich unterteilt.

Bei derartigen Kupplungsanordnungen besteht grundsätzlich das Problem, dass im ersten Raumbereich, in welchem neben den verschiedenen Reibflächenanordnungen beispielsweise auch eine Torsionsschwingungsdämpferanordnung oder im Falle eines hydrodynamischen Drehmomentwandlers auch ein Turbinenrad und ein Leitrad angeordnet sind, im Betrieb erhebliche Druckvariationen auftreten können. Da der im zweiten Raumbereich vorhandene Fluiddruck im Allgemeinen dafür verantwortlich ist, eine das Anpresselement in Richtung Einrücken beaufschlagende Kraftwirkung zu generieren, und da der Fluiddruck im ersten Raumbereich ebenfalls auf das Anpresselement einwirkt und somit eine Gegenkraft generiert, beeinflussen Fluiddruckschwankungen im ersten Raumbereich die durch das Anpresselement ausgeübte Anpresskraft bzw. dessen Positionierung. Dies kann in ungünstigen Situationen dazu führen, dass beispielsweise bei plötzlichem Druckabfall im ersten Raumbereich und mithin entsprechendem Wegfall der auf das Anpresselement einwirkenden Gegenkraft die Kupplungsanordnung spontan in einen Einrückzustand gelangt, obgleich dies in einer jeweiligen Fahrsituation, beispielsweise auch beim Anlassen eines Antriebsaggregats oder beim Anfahren eines Fahrzeugs, nicht auftreten soll.

Die US 5 ,172,799 A zeigt einen Weg zur Vermeidung des zuvor erläuterten Problems auf. Hierzu ist im ersten Raumbereich ein Abschirmelement vorgesehen, das den ersten Raumbereich in einen die Reibflächenanordnungen enthaltenden ersten Teilraumbereich und einen im Wesentlichen zwischen dem Abschirmelement und dem Anpresselement gebildeten zweiten Teilraumbereich unterteilt. Dem zweiten Teilraumbereich ist ein erster Fluidströmungsweg zur Zufuhr oder Abfuhr von Fluid zugeordnet. Ein zweiter Fluidströmungsweg dient zur Zufuhr oder Abfuhr von Fluid gegenüber dem zweiten Raumbereich, und ein dritter Fluidströmungsweg dient zur Zufuhr oder Abfuhr von Fluid gegenüber dem ersten Teilraumbereich. Es wird also eine Kupplungsanordnung nach dem Drei-Leitungs-Typ beschrieben.

Durch das Bereitstellen des zweiten Teilraumbereichs ist dafür gesorgt, dass das Anpresselement durch im ersten Teilraumbereich des ersten Raumbereichs auftretende Druckvariationen nicht beeinflussbar ist, sondern durch den im zweiten Teilraumbereich vorhandenen und über den ersten Fluidströmungsweg definiert einstellbaren Fluiddruck belastet wird. Im ersten Raumbereich bzw. im ersten Teilraumbereich desselben auftretende Druckschwankungen können somit das Anpresselement nur vergleichsweise schwach beeinflussen.

Während die bislang behandelte Kupplungsanordnung bevorzugt in einem mehrstufigen Automatikgetriebe vorgesehen sein wird, zeigt die US 2007/0235277 A1 eine Kupplungsanordnung in einem hydrodynamischen Drehmomentwandler. Auch im Drehmomentwandler sind mehrere Raumbereiche vorgesehen, wobei in einem ersten Raumbereich ein Abschirmelement vorgesehen ist, das diesen Raumbereich in einen mit Reibflächenanordnungen versehenen ersten Teilraumbereich und einen im Wesentlichen zwischen dem Abschirmelement und einem Anpresselement gebildeten zweiten Teilraumbereich unterteilt. Dem zweiten Teilraumbereich ist ein erster Fluidstromungsweg zur Zufuhr oder Abfuhr von Fluid zugeordnet. Ein zweiter Fluidströmungsweg dient zur Zufuhr oder Abfuhr von Fluid gegenüber dem zweiten Raumbereich, und ein dritter Fluidströmungsweg dient zur Zufuhr oder Abfuhr von Fluid gegenüber dem ersten Teilraumbereich. Auch hier wird also eine Kupplungsanordnung nach dem Drei-Leitungs-Typ beschrieben.

Es ist die Aufgabe der vorliegenden Erfindung, eine Kupplungsanordnung, insbesondere nasslaufende Kupplungsanordnung oder Überbrückungskupplungsanordnung in einer hydrodynamischen Kopplungseinrichtung, vorzusehen, bei welcher auch bei einem Zwei-Leitungs-Typ eine definierte Ansteuerbarkeit eines Anpresselements gewährleistet ist.

Bei einem vergleichsweise einfach zu realisierenden Aufbau des so genannten Zwei-Leitungs-Typs wird vorgeschlagen, dass das Anpresselement wenigstens eine Verbindungsöffnung aufweist, über welche der erste Teilraumbereich und der zweite Raumbereich in Fluidaustauschverbindung stehen. Dies bedeutet, dass je nachdem, ob über den zweiten Fluidströmungsweg oder den dritten Fluidströmungsweg Fluid zu und über den jeweils anderen Fluidströmungsweg Fluid abgeführt wird, bei grundsätzlich vorhandener Durchströmung des Gehäuses das Anpresselement in Richtung Einrücken oder in Richtung Ausrücken belastet werden kann.

Dabei kann weiter vorgesehen sein, dass die wenigstens eine Verbindungsöffnung radial außerhalb des ersten Dichtungsbereichs vorgesehen ist.

Bei einer alternativen Variante des so genannten Drei-Leitungs-Typs wird vorgeschlagen, dass ein vierter Fluidströmungsweg zur Zufuhr/Abfuhr von Fluid zu/von dem ersten Teilraumbereich vorgesehen ist, wobei vorzugsweise weiter vorgesehen ist, dass zwischen dem ersten Teilraumbereich und dem zweiten Raumbereich keine Fluidverbindung besteht.

Nachfolgend wird die vorliegende Erfindung mit Bezug auf die beiliegenden Figuren detailliert beschrieben. Hierbei soll darauf hingewiesen werden, dass die Figur 1 den Stand der Technik darstellt, und lediglich dazu dient, einen Überblick über eine Kupplungsanordnung zu schaffen, die gemäß den Figuren 2 oder 3 mit dem Erfindungsgegenstand ausgebildet sein kann.

Es zeigt:

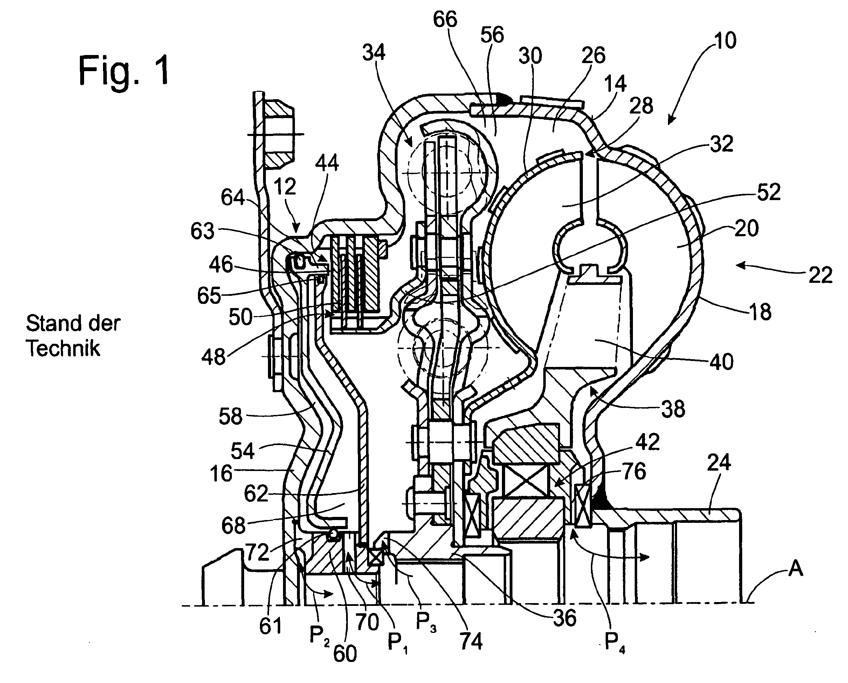

- Fig. 1: eine Teil-Längsschnittansicht einer in einem hydrodynamischen Drehmomentwandler implementierten Kupplungsanordnung gemäß dem Stand der Technik;

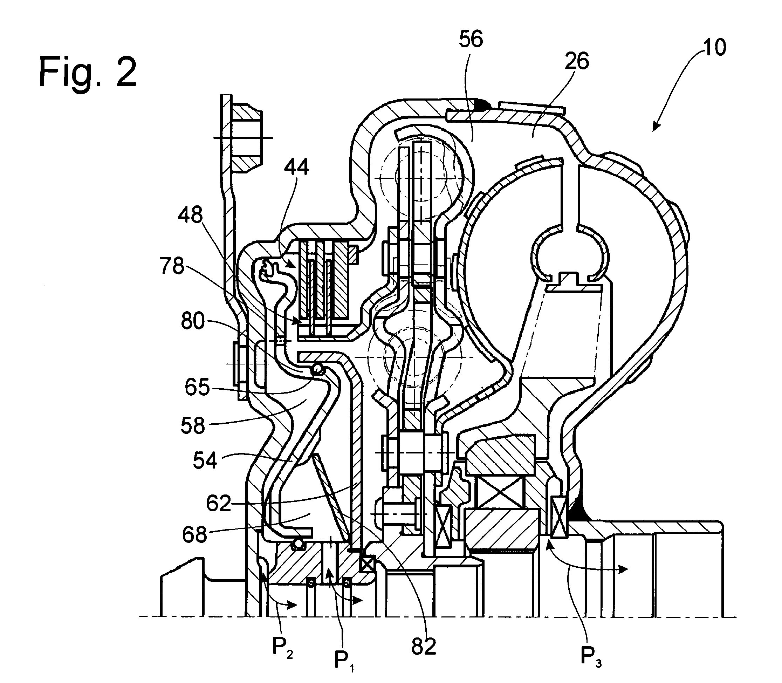

- Fig.2: eine Kupplungsanordnung gemäß der Fig. 1 in erfindungsgemäßer Ausführung;

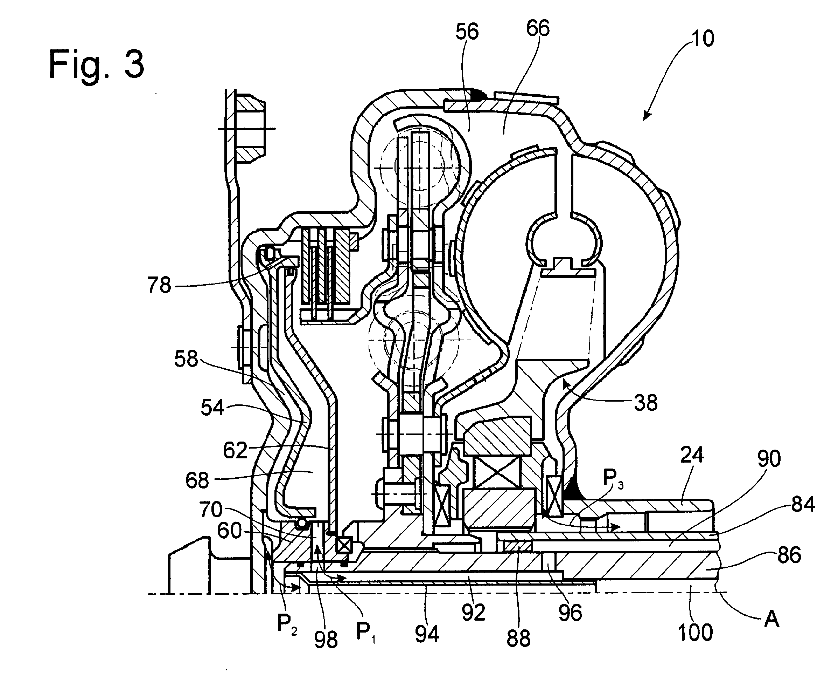

- Fig. 3: wie Fig. 2, aber mit einer alternativen nicht erfindungsgemäßen Ausgestaltungsart.

In Fig. 1 ist ein hydrodynamischer Drehmomentwandler 10 dargestellt, bei welchem in Form einer allgemein mit 12 bezeichneten Überbrückungskupplungsanordnung eine Kupplungsanordnung implementiert ist, wie sie aus dem Stand der Technik bekannt ist.

Der hydrodynamische Drehmomentwandler 10 bzw. die Kupplungsanordnung umfasst ein Gehäuse 14 mit einer motorseitigen Gehäuseschale 16 und einer getriebeseitigen Gehäuseschale 18. An der Innenseite der getriebeseitigen Gehäuseschale 18 sind Pumpenradschaufeln 20 angeordnet, so dass diese zusammen mit der Gehäuseschale 18 ein Pumpenrad 22 bilden, das mit einer Pumpenradnabe 24 zum Antreiben einer Fluidpumpe in ein Getriebe eingreifend positioniert werden kann.

Im Innenraum 26 des Gehäuses 14 ist ein Turbinenrad 28 mit einer Mehrzahl von an einer Turbinenradschale 30 getragenen Turbinenradschaufeln 32 vorgesehen. Über eine allgemein mit 34 bezeichnete Torsionsschwingungsdämpferanordnung, hier zweistufig ausgebildet, ist das Turbinenrad 28 an eine Abtriebsnabe 36 zur gemeinsamen Drehung um eine Drehachse A angebunden.

Zwischen dem Turbinenrad 28 und dem Pumpenrad 22 liegt ein Leitrad 38 mit seinen Leitradschaufeln 40. Über eine Freilaufanordnung 42 ist das Leitrad 38 auf einer nicht dargestellten Stützhohlwelle auf der Drehachse A getragen, so dass es in einer Richtung rotieren kann und gegen Rotation in der anderen Richtung gesperrt ist.

Die Überbrückungskupplungsanordnung 12 umfasst eine mit der Gehäuseschale 16 drehfest gekoppelte erste Reibflächenanordnung 44 mit einer Mehrzahl von Reibelementen 46. Diese sind in ihrem radial äußeren Bereich an der Gehäuseschale 16, die gleichzeitig auch einen Reibelemententräger für die Reibflächenanordnung 44 bildet, drehfest, jedoch in Richtung der Drehachse A bewegbar gehalten. Eine zweite Reibflächenanordnung 48 umfasst eine Mehrzahl von Reibelementen 50, die mit den Reibelementen 46 alternierend angeordnet sind und an einem Reibelemententräger 52 drehfest, jedoch in Richtung der Drehachse A bewegbar getragen sind. Der Reibelemententräger 52 ist an einem Eingangsbereich der Torsionsschwingungsdämpferanordnung 34 festgelegt, so dass ein über die Überbrückungskupplungsanordnung 12 zu übertragendes Drehmoment über die Torsionsschwingungsdämpferanordnung 34 auf die Abtriebsnabe 36 geleitet wird.

Die Überbrückungskupplungsanordnung 12 umfasst weiterhin einen Kupplungskolben 54 als Anpresselement für die beiden Reibflächenanordnungen 44, 48. Durch den Kupplungskolben 54 wird der Innenraum 26 in einen ersten Raumbereich 56 und einen zweiten Raumbereich 58 unterteilt. Im ersten Raumbereich 56 sind im Wesentlichen die Reibflächenanordnungen 44, 48, die Torsionsschwingungsdämpferanordnung 34 und das Turbinenrad 28 angeordnet. Durch Erhöhung des Fluiddrucks im zweiten Raumbereich 58, der im Wesentlichen zwischen dem Kupplungskolben 54 und der Gehäuseschale 16 gebildet ist, bezüglich des Fluiddrucks im ersten Raumbereich 56 kann der Kupplungskolben 54 axial in Richtung auf die Reibflächenanordnungen 44, 48 zu bewegt werden, um diese in gegenseitigen Reibeingriff zu pressen.

Die beiden Raumbereiche 56, 58 sind bezüglich einander durch den Kupplungskolben 54 fluiddicht getrennt. Hierfür ist der Kupplungskolben 54 auf einer Gehäusenabe 60 in seinem radial inneren Bereich unter Zwischenlagerung eines Dichtungselements 61 fluiddicht bewegbar geführt. In seinem radial äußeren Bereich ist der Kupplungskolben 54 an einem entsprechenden zylindrischen Abschnitt der Gehäuseschale 16 unter Zwischenlagerung eines Dichtungselements 63 axial fluiddicht bewegbar geführt.

Ein Abschirmungselement 62 ist in seinem radial inneren Bereich beispielsweise durch Verschweißen oder dergleichen an der Gehäusenabe 60 festgelegt, so dass hier eine fluiddichte Anbindung des Abschirmungselements 62 an die Gehäusenabe 60 besteht. Entsprechend der Formgebung des Kupplungskolbens 54 ist das ebenfalls ringartig ausgebildete Abschirmungselement 62 nach radial außen geführt und an einem zylindrischen Ansatz 64 des Kupplungskolbens 54 unter Zwischenlagerung eines Dichtungselements 65 bezüglich diesem fluiddicht bewegbar. Das Abschirmungselement 62 unterteilt den ersten Raumbereich 56 in einen ersten Teilraumbereich 66 und einen zweiten Teilraumbereich 68. Der erste Teilraumbereich 66 enthält im Wesentlichen wieder die Reibflächenanordnungen 44, 48, die Torsionsschwingungsdämpferanordnung 34 und das Turbinenrad 28. Der zweite Teilraumbereich 68 ist durch die feste Anbindung des Abschirmungselements 62 in einem radial inneren Bereich und die fluiddichte Bewegbarkeit des Kupplungskolbens 54 bezüglich des radial äußeren Bereichs des Abschirmungselements 62 im Wesentlichen fluiddicht gegenüber dem ersten Teilraumbereich 66 getrennt und im Wesentlichen zwischen dem Kupplungskolben 54 und dem Abschirmungselement 62 gebildet.

In der Gehäusenabe 60 ist in Zuordnung zu dem zweiten Teilraumbereich 68 zumindest eine Öffnung 70 gebildet. Diese stellt in Verbindung mit einem zumindest teilweise in einer nicht dargestellten Abtriebswelle ausgebildeten Kanal einen durch einen Strömungspfeil P₁ veranschaulichten ersten Fluidströmungsweg dar, über welchen Fluid, gefördert von einer beispielsweise in einem Getriebe vorgesehenen Fluidpumpe in den zweiten Teilraumbereich 68 geleitet werden kann bzw. aus dem zweiten Teilraumbereich 68 abgezogen werden kann. Es besteht hier zwischen dem zweiten Teilraumbereich 68 und einer Fluidquelle bzw. einem Fluidreservoir beispielsweise über eine entsprechend gestaltete und ansteuerbare Ventilanordnung eine Fluidaustauschverbindung, die die Zufuhr und Abfuhr von Fluid zu bzw. von dem zweiten Teilraumbereich 68 und mithin die Einstellung des Fluiddrucks im zweiten Teilraumbereich 68 unabhängig vom ersten Teilraumbereich 66 und auch unabhängig vom zweiten Raumbereich 58 ermöglicht.

Der Fluiddruck im zweiten Raumbereich 58 kann über einen durch einen Strömungspfeil P₂ angedeuteten Strömungsweg eingestellt werden, welcher völlig unabhängig ist vom Strömungsweg P₁ und eine oder mehrere Öffnungen 72 in der Gehäusenabe 60 umfassen kann. Beispielsweise kann in einer nicht dargestellten Abtriebswelle eine zentrale Durchgangsöffnung vorgesehen sein, durch welche hindurch Fluid zu bzw. von dem zweiten Raumbereich 58 geführt werden kann.

Bei dem in der Fig. 1 dargestellten Aufbau des hydrodynamischen Drehmomentwandlers 10 als so genannten Drei-Leitungs-Typ kann über einen durch einen Strömungspfeil P₃ angedeuteten dritten Fluidströmungsweg Fluid dem ersten Teilraumbereich 66 zugeführt werden, und zwar wiederum unabhängig von der Fluidzufuhr bzw. Fluidabfuhr zu/von dem zweiten Teilraumbereich 68 bzw. dem zweiten Raumbereich 58. Der dritte Fluidströmungsweg P₃ kann eine oder mehrere an der Abtriebsnabe 36 gebildete Öffnungen 74 umfassen. Das über den dritten Fluidströmungsweg P₃ in den ersten Teilraumbereich 66 eingeleitete Fluid strömt zwischen dem Abschirmelement 62 und der Torsionsschwingungsdämpferanordnung 34 nach radial außen, umströmt die Reibflächenanordnungen 44, 48, die selbst zur Erzeugung einer lokalen Fluidzirkulation ausgebildet sein können, strömt dann weiter entlang der Außenseite der Torsionsschwingungsdämpferanordnung 34 und kann über eine oder mehrere Öffnungen 76 im Bereich der Freilaufanordnung 42 und einem vierten Fluidströmungsweg P₄ abgezogen werden. Selbstverständlich kann dieses im ersten Teilraumbereich 66 permanent ausgetauschte Fluid auch dazu genutzt werden, die Fluidzirkulation im Bereich des Pumpenrads 22, des Turbinenrads 28 und des Leitrads 38 aufzubauen.

Der dritte Fluidströmungsweg P₃ und der vierte Fluidströmungsweg P₄ können beispielsweise gebildet sein zwischen der Außenumfangsfläche der Abtriebswelle und einer nicht dargestellten Stützhohlwelle einerseits und der Außenumfangsfläche einer derartigen Stützhohlwelle und der Pumpenradnabe 24 andererseits. Es sei hier darauf hingewiesen, dass selbstverständlich durch die Ausgestaltung einer Abtriebswelle mit mehreren konzentrisch angeordneten Kanalbereichen, jeweils gebildet durch entsprechende rohrartige Einsatzelemente, in einer derartigen Abtriebswelle eine Mehrzahl von an verschiedenen axialen Bereichen dann nach radial außen offenen Kanälen bzw. Fluidströmungswegen gebildet werden kann.

Bei dem mit Bezug auf die Fig. 1 beschriebenen Aufbau einer Überbrückungskupplungsanordnung 12 in einem hydrodynamischen Drehmomentwandler 10 ist dafür gesorgt, dass der Kupplungskolben 54 im Wesentlichen über seine gesamte radiale Erstreckung von dem zweiten Teilraumbereich 68 überdeckt ist und somit bezüglich des ersten Teilraumbereichs 66 vollständig abgeschirmt ist. Im ersten Teilraumbereich 66 auftretende Druckschwankungen des darin enthaltenen Fluids übertragen sich somit nicht auf den Kupplungskolben 54, sondern werden durch das Abschirmungselement 62 von diesem ferngehalten. Durch Fliehkräfte im Rotationsbetrieb auftretende Druckvariationen entstehen an beiden axialen Seiten des Kupplungskolbens 54 im zweiten Raumbereich 58 und zweiten Teilraumbereich 68 gleichermaßen, so dass diesbezüglich keine Probleme zu erwarten sind.

Da der zweite Teilraumbereich 68 bezüglich des ersten Teilraumbereichs 66 idealerweise vollständig fluiddicht abgeschlossen ist, etwaige in der Realität unvermeidbare Fluidleckagen im Angrenzungsbereich des Abschirmelements 62 an den zylindrischen Abschnitt 64 des Kupplungskolbens 54 außen vorgelassen, und da der Fluiddruck im zweiten Teilraumbereich 68 unabhängig insbesondere vom Fluiddruck im ersten Teilraumbereich 66 eingestellt werden kann, nämlich durch Variation des Fluiddrucks über den von den anderen Fluidströmungswegen unabhängigen Fluidströmungsweg P₁, wird es möglich, für den Kupplungskolben 54 einen für im Wesentlichen alle Betriebszustände näherungsweise konstanten oder ggf. drehzahl- und somit fliehkraftabhängig sich ändernden Gegendruck im zweiten Teilraumbereich 68 aufzubauen. Gegen diesen Druck muss zum Durchführen von Einrückvorgängen der Kupplungskolben 54 verschoben werden, nämlich durch entsprechende Erhöhung des Fluiddrucks im zweiten Raumbereich 58. Dabei kann beispielsweise so vorgegangen werden, dass bei einer Verschiebung des Kupplungskolbens 54 zum Einrücken der Überbrückungskupplungsanordnung 12 und der dabei auftretenden Verringerung des Volumens des zweiten Teilraumbereichs 68 das Verdrängen einer entsprechenden Fluidmenge aus dem zweiten Teilraumbereich 68 unter Aufrechterhaltung eines konstanten Drucks zugelassen wird, so dass auch der Einrückvorgang immer gegen einen gleichmäßigen, konstanten Druck durchgeführt werden kann. Beim Ausrücken, also entsprechend auch Vergrößern des Volumens des zweiten Teilraumbereichs 68, wird dann zum Aufrechterhalten des konstanten Drucks in dem zweiten Teilraumbereich 68 Fluid über den ersten Fluidströmungsweg P₁ nachgespeist.

Bei einer alternativen Vorgehensweise ist es denkbar, auch bei Betätigungsvorgängen des Kupplungskolbens 54 und dabei auftretenden Variationen des Volumens des zweiten Teilraumbereichs 68 im Wesentlichen keine Anpassung des Fluiddrucks vorzunehmen, also geringe Druckanstiege bzw. Abnahmen zuzulassen, so dass mit zunehmendem Einrücken der Kupplungskolben 54 gegen einen zunehmenden Fluiddruck im zweiten Teilraumbereich 68 verschoben werden kann. Dieser Fluiddruck ist an dem vorzugsweise im Wesentlichen starren Abschirmelement 62 abgestützt, das zumindest teilweise eine Abstützung am Fluiddruck im ersten Teilraumbereich 66 erfährt.

Um im Betrieb eine axiale Belastung des Abschirmelements 62 grundsätzlich so gering als möglich zu halten, kann vorgesehen sein, dass der Druck im zweiten Teilraumbereich 68 auf ein Niveau eingestellt wird, welches normalerweise auch im ersten Teilraumbereich 66 vorhanden ist, so dass grundsätzlich, etwaige Druckfluktuationen im ersten Teilraumbereich 66 außen vor lassend, das Abschirmelement 62 durch die an beiden Seiten des selben vorherrschenden Fluiddrücke im Wesentlichen nicht in axialer Richtung belastet wird. Grundsätzlich ist es auch möglich, dass der zweite Teilraumbereich 68 drucklos gehalten wird, also im Wesentlichen nur in Verbindung mit einem drucklosen Reservoir ist, so dass, je nach axialer Bewegung des Kupplungskolbens 54 und entsprechender Veränderung des Volumens des zweiten Teilraumbereichs 68, Fluid angesaugt oder ausgestoßen wird. Eine den Kupplungskolben 54 in Richtung Ausrücken belastende Kraft kann dann durch ein in der Fig. 1 nicht dargestelltes Federelement erzeugt werden, welches bezüglich der Gehäusenabe 60 einerseits und des Kupplungskolbens 54 andererseits abgestützt ist.

Eine erfindungsgemäße Ausgestaltungsform eines hydrodynamischen Drehmomentwandlers 10 ist in Fig. 2 gezeigt. Dieser entspricht hinsichtlich seines grundsätzlichen Aufbaus dem mit Bezug auf die Fig. 1 beschriebenen, so dass auf die diesbezüglichen Ausführungen verwiesen werden kann.

Ein grundsätzlicher Unterschied besteht jedoch darin, dass der Drehmomentwandler 10 der Fig. 2 vom so genannten Zwei-Leitungs-Typ ist. Die Fluidzufuhr bzw. Abfuhr in dem Gehäuseinnenraum 26, also die beiden Raumbereiche 56, 58 desselben, erfolgt über die beiden Fluidströmungswege P₂ und P₃. Über eine oder mehrere Öffnungen 78 im Kupplungskolben 54 ist eine Fluidaustauschverbindung zwischen den beiden Raumbereichen 56, 58 hergestellt, wobei, wie man in Fig. 2 erkennt, diese Öffnungen 78 radial außerhalb desjenigen Bereichs liegen, in welchem der Kupplungskolben 54 fluiddicht bezüglich des Abschirmelements 62 bewegbar ist. Je nachdem, ob der Kupplungskolben 54 in Richtung Einrücken oder in Richtung Ausrücken zu verschieben ist, wird die Strömungsrichtung eingestellt, also Fluid entweder über den Fluidströmungsweg P₂ zugeführt und den Fluidströmungsweg P₃ abgeführt, oder umgekehrt. Durch den Drosseleffekt der Öffnungen 78 ist gewährleistet, dass eine den Kupplungskolben 54 axial belastende Druckdifferenz in der einen oder anderen Richtung entsteht, insbesondere dort, wo der Kupplungskolben 54 in seinem radial äußeren Bereich nicht durch das Abschirmelement 62 abgeschirmt ist.

Der radial innerhalb der beiden Reibflächenanordnungen 44, 48 liegende Bereich des Kupplungskolbens 54 ist, ähnlich wie bei der vorangehenden Asugestaltungsform, durch das Abschirmelement 62 überdeckt, wobei auch hier ein zylindrischer Abschnitt 80 am Kupplungskolben 54 dazu dient, unter Zwischenlagerung des Dichtungselements 65 einen fluiddichten Abschluss bezüglich des in diesem Bereich entsprechend zylindrisch gestalteten Abschirmelements 62 zu erzeugen. In dem auch hier gebildeten zweiten Teilraumbereich 68 kann über den ersten Fluidströmungsweg P₁ wieder der Fluiddruck definiert eingestellt werden bzw. dafür gesorgt werden, dass durch Druckloshalten dieses zweiten Teilraumbereichs 68 entsprechend immer der gleiche, ggf. drehzahlabhängig sich ändernde Fluiddruck den inneren Bereich des Kupplungskolbens 54 belastet.

Man erkennt hier ein beispielsweise als Tellerfeder ausgebildetes Vorspannelement 82, das unabhängig von dem im zweiten Teilraumbereich 68 vorherrschenden Fluiddruck dafür sorgt, dass der Kupplungskolben 54 in Richtung Ausrücken vorgespannt ist.

Eine weitere Ausgestaltungsform eines hydrodynamischen Drehmomentwandlers gemäß dem Zwei-Leitungs-Prinzip ist in Fig. 3 gezeigt. Man erkennt grundsätzlich, dass in konstruktiver Hinsicht hier große Übereinstimmung mit der in Fig. 1 gezeigten Anordnung besteht. Insbesondere deckt das Abschirmelement 62 im Wesentlichen den gesamten radialen Bereich des Kupplungskolbens 54 ab, so dass dieser im Wesentlichen unabhängig von Druckvariationen im ersten Teilraumbereich 66 bewegt werden kann. Die Öffnungen 78 sind auch hier wieder in einem Bereich gebildet, im welchem der Kupplungskolben 54 eine direkte Trennung zwischen den beiden Raumbereichen 56, 58 erzeugt, also im Wesentlichen auch radial außerhalb des Abschirmelements 62.

In Fig. 3 erkennt man weiterhin neben der beispielsweise an einem Getriebe oder Getriebegehäuse feststehend getragenen Stützhohlwelle 84 auch die darin um die Drehachse A grundsätzlich drehbare Abtriebswelle 86. Die Stützhohlwelle 84 trägt das Leitrad 38 in der vorangehend beschriebenen Art und Weise und bildet zusammen mit der Pumpenradnabe 24 einen wesentlichen Bereich des dritten Fluidströmungswegs P₃. In ihrem axialen Endbereich ist die Stützhohlwelle 84 durch eine dynamische Dichtung 88 fluiddicht bezüglich der Abtriebswelle 86 gehalten, so dass zwischen diesen beiden Wellen 84, 86 ein Zwischenraum 90 gebildet ist, welcher einen Teil des ersten Fluidströmungswegs P₁ bildet. Ein weiterer ringartiger Zwischenraum 92 ist zwischen dem Innenumfang der als Hohlwelle ausgebildeten Abtriebswelle 86 und einen beispielsweise aus Blechmaterial geformten, rohrartigen Einsatzelement 94 gebildet. Dieser ist an seinen beiden axialen Enden unter Erzeugung des Zwischenraums 92 an dem Innenumfang der Abtriebswelle 86 festgelegt. Eine oder mehrere Öffnungen 96 verbinden die beiden ringartigen Zwischenräume 90, 92. Ferner ist der Zwischenraum 92 über eine oder mehrere Öffnungen 98 nach radial außen zu der oder den Öffnungen 70 in der Gehäusenabe 60 offen. Beidseits der Öffnungen 98 erzeugen ringartige Dichtungselemente einen fluiddichten Abschluss zwischen der Abtriebswelle 86 und der Gehäusenabe 60. Im radial zentralen Bereich der Abtriebswelle 86 ist eine zentrale Öffnung 100 gebildet, die einen wesentlichen Bereich des von bzw. zu dem zweiten Raumbereich 58 führenden zweiten Fluidströmungswegs P₂ bildet.

Auch bei der in Fig. 3 dargestellten Ausgestaltungsform kann abhängig davon, ob über den zweiten Fluidströmungsweg P₂ oder den dritten Fluidströmungsweg P₃ Fluid zu bzw. abgeführt wird, jeweils eine den Kupplungskolben 54 in der einen bzw. anderen axialen Richtung belastende Kraft generiert werden. Der Fluiddruck im zweiten Teilraumbereich 68 kann über den ersten Fluidströmungsweg P₁ davon unabhängig eingestellt, insbesondere auch eingeregelt werden, so dass, wie vorangehend bereits dargelegt, der Kupplungskolben 54 immer gegen einen im Wesentlichen konstanten Druck verschoben werden kann bzw. ggf. auch durch definierte Variation des Fluiddrucks im zweiten Teilraumbereich 68 die Bewegung des Kupplungskolbens 54 in der einen oder anderen Richtung unterstützt werden kann. Insbesondere ist es bei dieser und auch den anderen Ausgestaltungsformen möglich, durch entsprechende Erhöhung bzw. Einstellung des Fluiddrucks im zweiten Teilraumbereich 68 eine Offenhaltefunktion zu realisieren, mit welcher sichergestellt ist, dass der Kupplungskolben 54 definiert in seiner Ausrückpositionierung gehalten wird.

## Patentansprüche

1. Kupplungsanordnung, insbesondere nasslaufende Kupplungsanordnung oder Überbrückungskupplungsanordnung einer hydrodynamischen Kopplungseinrichtung, umfassend ein mit Fluid gefülltes oder füllbares Gehäuse (14), eine mit dem Gehäuse (14) zur Drehung um eine Drehachse (A) gekoppelte erste Reibflächenanordnung (44), eine mit einem Abtriebsorgan (36) zur Drehung um die Drehachse (A) gekoppelte zweite Reibflächenanordnung (48), ein mit dem Gehäuse (14) um die Drehachse (A) drehbares Anpresselement (54), durch welches die erste Reibflächenanordnung (44) und die zweite Reibflächenanordnung (48) in Reibeingriff pressbar sind, wobei das Anpresselement (54) einen Innenraum (26) des Gehäuses (14) in einen die Reibflächenanordnungen (44, 48) enthaltenden ersten Raumbereich (56) und einen zweiten Raumbereich (58) unterteilt, ferner umfassend ein Abschirmelement (62) im ersten Raumbereich (56), wobei das Abschirmelement (62) den ersten Raumbereich (56) in einen die Reibflächenanordnungen (44, 48) enthaltenen ersten Teilraumbereich (66) und einen im Wesentlichen zwischen dem Abschirmelement (62) und dem Anpresselement (54) gebildeten zweiten Teilraumbereich (68) unterteilt, wobei das Anpresselement (54) in einem ersten Dichtungsbereich (65) bezüglich des Abschirmelements (62) fluiddicht bewegbar ist, und wobei dem zweiten Teilraumbereich (68) ein erster Fluidströmungsweg (P₁) zugeordnet ist zur Zufuhr/Abfuhr von Fluid zu/von dem zweiten Teilraumbereich (68) unabhängig von der Fluidzufuhr/Abfuhr zu/von dem ersten Teilraumbereich (66), ein zweiter Fluidströmungsweg (P₂) zur Zufuhr/Abfuhr von Fluid zu/von dem zweiten Raumbereich (58) und ein dritter Fluidströmungsweg (P₃) zur Zufuhr/Abfuhr von Fluid zu/von dem ersten Teilraumbereich (66), **dadurch gekennzeichnet, dass** das Anpresselement (54) wenigstens eine Verbindungsöffnung (78) aufweist, über welche der erste Teilraumbereich (66) und der zweite Raumbereich (58) in Fluidaustauschverbindung stehen, wobei die wenigstens eine Verbindungsöffnung (78) radial außerhalb des ersten Dichtungsbereichs (65) vorgesehen ist.

2. Kupplungsanordnung nach Anspruch 1,
**dadurch gekennzeichnet, dass** ein vierter Fluidströmungsweg (P₄) zur Zufuhr/Abfuhr von Fluid zu/von dem ersten Teilraumbereich (66) vorgesehen ist.

## Claims

1. Clutch arrangement, in particular wet-running clutch arrangement or lock-up clutch arrangement of a hydrodynamic coupling device, comprising a housing (14) which is filled or can be filled with fluid, a first friction face arrangement (44) which is coupled to the housing (14) for rotation about a rotational axis (A), a second friction face arrangement (48) which is coupled to an output member (36) for rotation about the rotational axis (A), a pressing element (54) which can be rotated with the housing (14) about the rotational axis (A) and by way of which the first friction face arrangement (44) and the second friction face arrangement (48) can be pressed into frictional engagement, the pressing element (54) dividing an inner space (26) of the housing (14) into a first spatial region (56) which contains the friction face arrangements (44, 48) and a second spatial region (58), comprising, furthermore, a shielding element (62) in the first spatial region (56), the shielding element (62) dividing the first spatial region (56) into a first part spatial region (66) which contains the friction face arrangements (44, 48) and a second part spatial region (68) which is formed substantially between the shielding element (62) and the pressing element (54), it being possible for the pressing element (54) to be moved in a fluidtight manner in a first sealing region (65) with regard to the shielding element (62), and the second part spatial region (68) being assigned a first fluid flow path (P₁) for feeding/discharging fluid to/from the second part spatial region (68) independently of the fluid feed/discharge to/from the first part spatial region (66), a second fluid flow path (P₂) for feeding/discharging fluid to/from the second spatial region (58) and a third fluid flow path (P₃) for feeding/discharging fluid to/from the first part spatial region (66), **characterized in that** the pressing element (54) has at least one connecting opening (78), via which the first part spatial region (66) and the second spatial region (58) are in a fluid exchange connection, the at least one connecting opening (78) being provided radially outside the first sealing region (65).

2. Clutch arrangement according to Claim 1, **characterized in that** a fourth fluid flow path (P₄) is provided for feeding/discharging fluid to/from the first part spatial region (66).

## Revendications

1. Agencement d'embrayage, en particulier agencement d'embrayage par voie humide ou agencement d'embrayage par pontage d'un dispositif d'accouplement hydrodynamique, comprenant un boîtier (14) rempli ou pouvant être rempli de fluide, un premier agencement de face de friction (44) couplé au boîtier (14) en vue de la rotation autour d'un axe de rotation (A), un deuxième agencement de face de friction (48) couplé à un organe d'entraînement (36) en vue de la rotation autour de l'axe de rotation (A), un élément de pression (54) pouvant tourner autour de l'axe de rotation (A) avec le boîtier (14) et au moyen duquel le premier agencement de face de friction (44) et le deuxième agencement de face de friction (48) peuvent être pressés en contact de friction, dans lequel l'élément de pression (54) divise une chambre intérieure (26) du boîtier (14) en une première région de chambre (56) contenant les agencements de faces de friction (44, 48) et une deuxième région de chambre (58), comprenant en outre un élément de protection (62) dans la première région de chambre (56), dans lequel l'élément de protection (62) divise la première région de chambre (56) en une première partie de région de chambre (66) contenant les agencements de faces de friction (44, 48) et une deuxième partie de région de chambre (68) formée essentiellement entre l'élément de protection (62) et l'élément de pression (54), dans lequel l'élément de pression (54) est mobile de façon étanche au fluide dans une première région d'étanchéité (65) par rapport à l'élément de protection (62), et dans lequel un premier chemin d'écoulement de fluide (P₁) pour l'amenée/l'évacuation de fluide dans/ou de la deuxième partie de région de chambre (68) indépendamment de l'amenée/l'évacuation de fluide dans/ou de la première partie de région de chambre (66), un deuxième chemin d'écoulement de fluide (P₂) pour l'amenée/l'évacuation de fluide dans/ou de la deuxième région de chambre (58) et un troisième chemin d'écoulement de fluide (P₃) pour l'amenée/l'évacuation de fluide dans/ou de la première partie de région de chambre (66) est associé à la deuxième partie de région de chambre (68), **caractérisé en ce que** l'élément de pression (54) présente au moins une ouverture de communication (78), par laquelle la première partie de région de chambre (66) et la deuxième région de chambre (58) se trouvent en communication d'échange de fluide, dans lequel ladite au moins une ouverture de communication (78) est prévue radialement à l'extérieur de la première région d'étanchéité (65).

2. Agencement d'embrayage selon la revendication 1, **caractérisé en ce qu'**il est prévu un quatrième chemin d'écoulement de fluide (P₄) pour l'amenée/l'évacuation de fluide dans/ou de la première partie de région de chambre (66).
